# EUROPEAN PATENT APPLICATION

(11) **EP 3 564 797 A1**
(43) Date of publication of application: **06.11.2019**
(21) Application number: 16925341.6
(22) Date of filing: 29.12.2016
(51) Int. Cl.: G06F 3/041, G06F 3/0488

(54) **FLEXIBLE DISPLAY SCREEN, AND METHOD AND DEVICE FOR DETECTING BEND OF FLEXIBLE DISPLAY SCREEN**

(71) Applicant: Shenzhen Royole Technologies Co., Ltd., Shenzhen, Guangdong 518052 (CN)
(72) Inventor: ZHANG, Xuan, Shenzhen Guangdong 518052 (CN)
(74) Representative: Hamer, Christopher K.
(86) International application number: PCT/CN2016/112993
(87) International publication number: WO 2018/119867

(57) **Abstract**

A flexible display screen is provided by the present application. The flexible display screen includes a first film layer (102) and a second film layer (104). A first surface of the first film layer (102) is configured with contacts (1022) arranged in a matrix. A first surface of the second film layer (104) is configured with chip resistors (1042) arranged in a matrix. Resistance values of each of the chip resistors (1042) monotonically vary from a center to an outer edge of each of the chip resistors (1042). The first surface of the first film layer (102) is fitted to the first surface of the second film layer (104). The contacts (1022) on the first film layer (102) are in one-to-one correspondence with the chip resistors (1042) on the second film layer (104), and a detection point (106) is formed by each of the contacts (1022) and corresponding chip resistors (1042). Detection points (106) are coupled to a processor (12) configured to detect an intensity of an electrical signal passing through each of the detection points (106), and determine a bending area of the flexible display screen according to a change of the intensity of the electrical signal. A method for detecting bending of a flexible display screen can accurately detect a bending position of the flexible display screen.

## Description

### TECHNICAL FIELD

The present disclosure relates to a technical field of a flexible display screen, more particularly to a flexible display screen, a method and device for detecting bending of the flexible display screen.

### BACKGROUND

Currently, common interactive modes of electronic devices include touch and click interaction. With the rise of flexible display screens in recent years, it will bring possibilities for many new gestures, and gesture interactions may be more intuitive and easy to use. Most of the existing flexible display screens use flexible OLED technology, which has bendable, twistable and foldable characteristics, thus a high-resolution and large-sized area and the portability of the devices may be no longer paradox, durable programs may be also significantly higher than previous screens, and a probability of accidental damage of the device may be decreased.

Flexible display devices are deformed flexibly to generate more bending. Compared with an existing device, the flexible display devices derive more gesture interactions, such as bending for zooming in and out, bending for page turning. These operations require to accurately detect a bending position of the flexible display screen of the flexible display device. In the prior art, methods for detecting a bending position of the flexible display screen are imprecise, and the bending position of the flexible display screen cannot be accurately determined.

### SUMMARY

Based on this, a flexible display screen is provided by the present disclosure, such that a bending position of the flexible display screen can be accurately determined.

A flexible display screen, wherein, the flexible display screen includes a first film layer and a second film layer; where
a first surface of the first film layer is configured with contacts arranged in a matrix;
a first surface of the second film layer is configured with chip resistors arranged in a matrix; resistance values of each of the chip resistors monotonically vary from a center to an outer edge of each of the chip resistors;
the first surface of the first film layer is fitted to the first surface of the second film layer; the contacts on the first film layer are in one-to-one correspondence with the chip resistors on the second film layer; a detection point is formed by each of the contacts and corresponding chip resistors; and
detection points are coupled to a processor configured to detect an intensity of an electrical signal passing through each of the detection points, and determine a bending area of the flexible display screen according to a change of the intensity of the electrical signal.

A method for detecting bending of a flexible display screen is provided by the present disclosure, such that a bending position of the flexible display screen can be accurately determined.

A method for detecting bending of a flexible display screen is based on the above processor, wherein the method includes:
receiving electrical signals generated by detection points on the flexible display screen;
obtaining a target detection point of which an intensity of an electrical signal changes; and
obtaining a position of the target detection point, and determining a bending area of the flexible display screen according to the position of the target detection point.

A device for detecting bending of a flexible display screen is provided by the present disclosure, such that a bending position of the flexible display screen can be accurately determined.

A device for detecting bending of a flexible display screen, wherein the device includes:
an electrical signal receiving module configured to receive electrical signals generated by detection points on the flexible display screen;
a target detection point obtaining module configured to obtain a target detection point of which an intensity of an electrical signal changes; and
a bending area obtaining module configured to obtain a position of the target detection point, and determining a bending area of the flexible display screen according to the position of the target detection point.

Implementation of some embodiments will have the following beneficial effects.

A display panel of a flexible display screen is configured with a first film layer and a second film layer fitted to the first film layer. A first surface of the first film layer is configured with contacts arranged in a matrix. A first surface of the second film layer is configured with chip resistors arranged in a matrix. The first surface of the first film layer is fitted to the first surface of the second film layer. The contacts and the chip resistors are in one-to-one correspondence to form detection points. Resistance values of the chip resistor monotonically vary from a center to an outer edge of each of the chip resistors. The detection points are coupled to a processor. An electrical signal passing through each of the detection points is transmitted to the processor. When the flexible display screen is bent, the processor determines a bending position of the flexible display screen by determining a change of intensities of received electrical signals. The bending position of the flexible display screen is detected by measuring the intensities of electrical signals between the chip resistors and the contacts, such that a calculation of obtained electrical signals can have higher accuracy, and the bending position can be accurately determined.

### BRIEF DESCRIPTION OF THE DRAWINGS

In order to more clearly illustrate the technical solution of the present disclosure, the accompanying drawings required for describing the embodiments will be briefly described below. Apparently, the accompanying drawings in the following description are merely the embodiments of the present disclosure, and other drawings may be obtained by those skilled in the art according to these accompanying drawings without paying any creative labor.
FIG. 1 is a schematic view of a flexible display screen provided by an embodiment.
FIG. 2 is a schematic view of a flexible display screen provided by an embodiment.
FIG. 3 is a schematic view of a chip resistor of a flexible display screen provided by an embodiment.
FIG. 4 is a schematic view of bending of a flexible display screen provided by an embodiment.
FIG. 5 is a schematic view of offset of detection points upon a flexible display screen being bent provided by an embodiment.
FIG. 6 is a schematic view of a distribution of intensity of an electrical signal upon a flexible display screen being bent provided by an embodiment.
FIG. 7 is a schematic view of intensity of an electrical signal upon a flexible display screen being bent provided by an embodiment.
FIG. 8 is a schematic view of intensity of an electrical signal upon a flexible display screen being bent provided by an embodiment.
FIG. 9 is a schematic view of a fixed point or a fixed area on a flexible display screen provided by an embodiment.
FIG. 10 is a schematic view of a distribution of an adhesive on a flexible display screen provided by an embodiment.
FIG. 11 is a schematic view of a distribution of a magnetic film on a flexible display screen provided by an embodiment.
FIG. 12 is flowchart of a method for detecting bending of a flexible display screen provided by an embodiment.
FIG. 13 is a schematic view of bending of a flexible display screen provided by an embodiment.
FIG. 14 is a schematic view of bending of a flexible display screen provided by an embodiment.
FIG. 15 is a schematic view of bending of a flexible display screen provided by an embodiment.
FIG. 16 is a schematic view of distributions of detection points upon a flexible display screen being bent provided by an embodiment.
FIG. 17 is flowchart of a device for detecting bending of a flexible display screen provided by an embodiment.

### DETAILED DESCRIPTION

The technical solutions in the embodiments of the present disclosure are clearly and completely described below with reference to the accompanying drawings in the embodiments of the present disclosure. Apparently, the described embodiments are merely some but not all of the embodiments of the present disclosure.

It should be understood that the terms used herein is for the purpose of describing particular embodiments only, and is not intended to limit the application. As used herein, the singular forms "a" and "the" are intended to include the plural forms as well, unless the context clearly indicates otherwise. It should also be understood that the terms "and/or" used herein refers to and includes any and all possible combinations of one or more of the associated listed items.

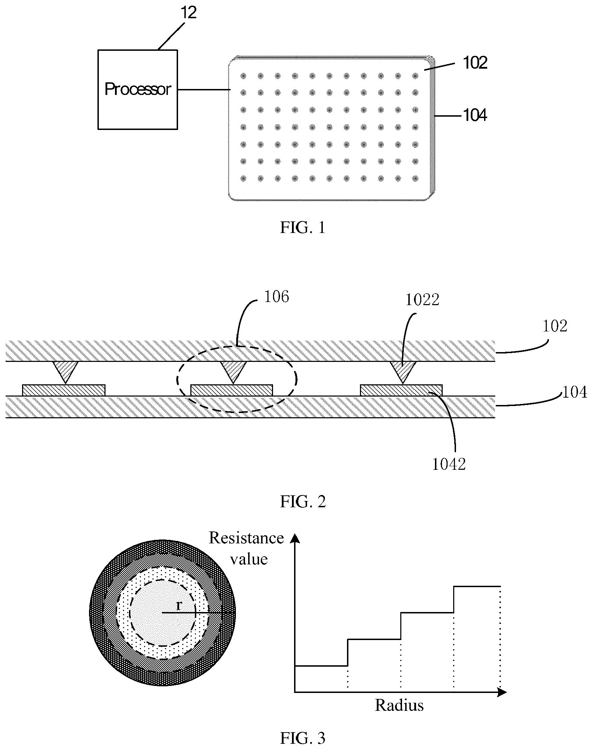

The present disclosure provides a flexible display screen, such that a bending position on the flexible display screen can be accurately detected. As illustrated in FIG. 1 and FIG. 2, the flexible display screen includes a first film layer 102 and a second film layer 104. A first surface of the first film layer 102 is configured with contacts 1022 arranged in a matrix. A first surface of the second film layer 104 is configured with chip resistors 1042 arranged in a matrix. Resistance values of each of the chip resistors 1042 monotonically vary from a center to an outer edge of each of the chip resistors 1042. As illustrated in FIG. 3, in this embodiment, resistance values of each of the chip resistors vary in steps from the center to the outer edge of each of the chip resistors 1042. In other embodiments, a relationship between the resistance values and radiuses of each of the chip resistors 1042 may be obtained according to a certain distribution formula. The first surface of the first film layer 102 is fitted to the first surface of the second film layer 104. The contacts 1022 on the first film layer 102 are in one-to-one correspondence with the chip resistors 1042 on the second film layer 104. A detection point 106 is formed by each of the contacts 1022 and corresponding chip resistors 1042. Detection points 106 are coupled to a processor 12. Electrical signals passing through the detection points 106 are transmitted to the processor 12. The processor 12 is configured to detect an intensity of an electrical signal passing through each of the detection points, and determine a bending area of the flexible display screen according to a change of the intensity of the electrical signal.

It should be noted that, in this embodiment, the first surface of the first film layer 102 and the first surface of the second film layer 104 are fitted together, but not fitted closely. Such that the fitting between the first film layer 102 and the second film layer 104 allows the contacts 1022 on the first film layer 102 and the chip resistors 1042 on the second film layer 104 to have a certain movable space formed between the first film layer 102 and the second film layer 104 when the flexible display screen is bent. Since resistance values of different regions on the chip resistors are different, obtained intensities of the electrical signals are also different, the bending area of the flexible display screen can be determined according to the different intensities of the electrical signals.

In this embodiment, the processor detects the intensity of the electrical signal of each of the detection points by directly obtaining the intensity of the electrical signal of each of the detection points, and determines whether the flexible display screen is bent according to the intensities of the electrical signals.

In another embodiment, the processor 12 can be coupled to each of the detection points 106 by an encoding circuit. The electrical signal of each of the detection points 106 is converted into a digital signal upon being encoded. The processor 12 analyzes positions of the detection points 106 of which corresponding digital signals change, and analyzes sampled and quantized codes of current intensities corresponding to the positions according to obtained digital signals, thus determining whether the flexible display screen is bent.

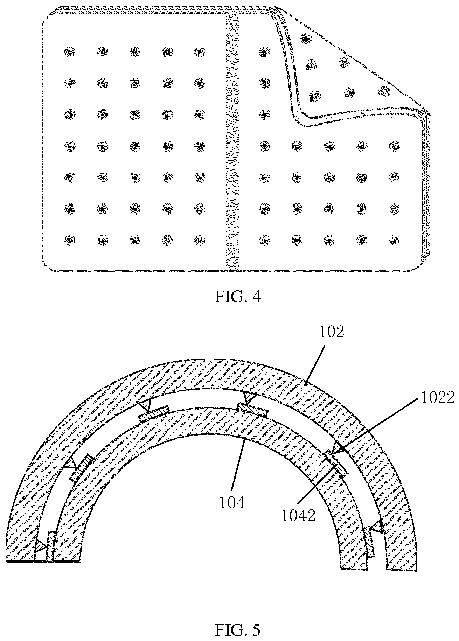

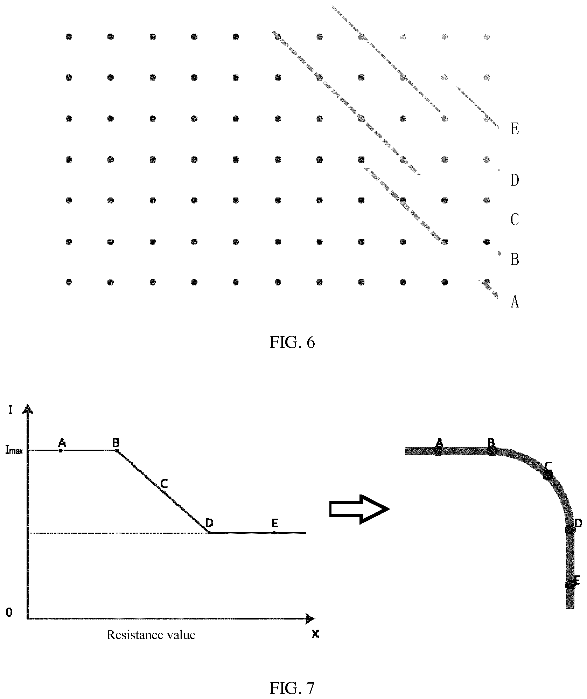

In this embodiment, when the flexible display screen is unfolded, each of the contacts on the first film layer is in contact with a center of each of corresponding chip resistors, and intensities of electrical signals obtained at all the detection points are the same. As illustrated in FIG. 4, when the flexible display screen is bent, a contact position between the contact and the chip resistor at each of the detection points on a bending area may be offset, as illustrated in FIG. 5. Since the resistance values of each of the chip resistors monotonically vary from the center to the outer edge of each of the chip resistors 1042, the electrical signal passing through each of the detection points on the bending area may be changed. As illustrated in FIG. 6, detection points with the same electrical signals on a bending area of the flexible display screen form a straight line when the flexible display screen 100 is bent. The electrical signals passing through the detection points on different straight lines on the bending area are different. Straight lines A, B, C, D, and E respectively represent that of the same intensities of the electrical signals of the detection points.

In an embodiment, resistance values of each of the chip resistors gradually increases from the center to the outer edge of each of the chip resistors 1042. The larger offset of a contact point between each of the contacts and of corresponding chip resistors is, the smaller an intensity of an electrical signal passing through corresponding detection point is. Such that a target detection point of which an intensity of an electrical signal changes may be found by detecting the intensity of the electrical signal passing through each of the detection points. An area of which electrical signals of the detection points change relative to an initial intensity of an electrical signal is taken as a bending area of the flexible display screen.

In another embodiment, a detected intensity of an electrical signal equals a first intensity when the flexible display screen is bent for a first time. When the flexible display screen continues to bend based on the first bending, a detection point of which a change of an intensity of electrical signal relative to the first intensity exceeds a threshold is taken as a target detection point. In this embodiment, the terms "first" and "second" are only configured to illustrate the sequence, and the number of the bending is not limited to the number listed in the embodiment of the present disclosure.

In other embodiments, resistance values of each of the chip resistor may also be gradually decreased from the center to the outer edge of each of the chip resistors.

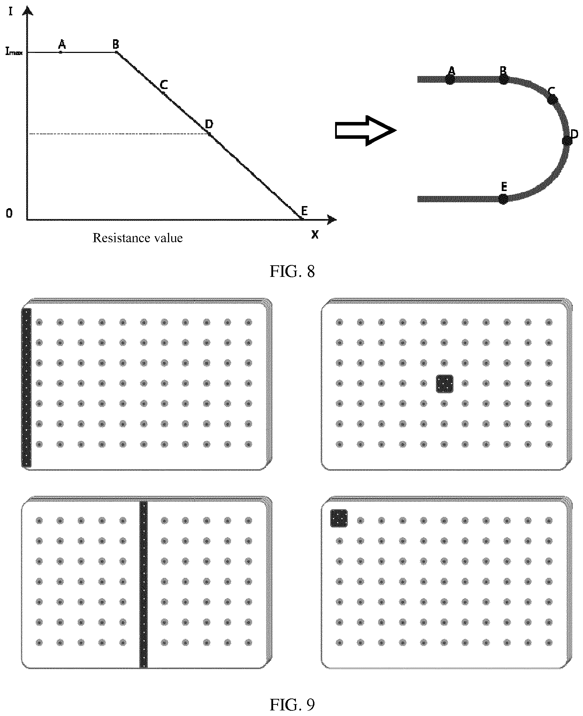

In this embodiment, specifically, the intensity of the electrical signal of each of the detection points may be obtained firstly. A distribution curve of intensities of electrical signals is obtained according to the intensity of the electrical signal of each of the detection points 106 and order of the detection points, and it is determined whether the flexible display screen is bent according to a change in trend of the distribution curve. For example, as illustrated in FIG. 7 and FIG. 8, the distribution curve illustrates that intensities of electrical signals at different contact positions vary as resistance values, and a corresponding bending condition is illustrated in the figure. Intensities of electrical signals of a segment from A to B in FIG. 7 remain constant, and it is indicated that the intensities of the electrical signals at the detection points on the straight line A and the straight line B remain unchanged, and the flexible display screen is not bent. Intensities of electrical signals of a segment from B to D gradually decrease, and it is indicated that the flexible display screen is bent at the detection points on the straight line B, the straight line C, and the straight line D. The larger offset of the contact from the center of the chip resistors 1042 at corresponding detection point is, the greater bending degree is. Intensities of electrical signals of a segment from D to E also remain constant, and it is indicated that the flexible display screen is not bent at the detection points 106 on the straight line D and the straight line E.

As illustrated in FIG. 8, intensities of electrical signals of a segment from A to B remain constant, it is indicated that the intensities of the electrical signals at the detection points on the straight line A and the straight line B remain unchanged, and the flexible display screen is not bent. Intensities of electrical signals of a segment from B to E gradually decrease, and it is indicated that the flexible display screen is bent at the detection points on the straight line B, the straight line C, the straight line D, and the straight line E. The larger offset of the contact from the center of the chip resistor 1042 at corresponding detection point is, the greater bending degree is.

In an embodiment, as illustrated in FIG. 9, the flexible display screen is configured with a fixed area or a fixed point, to make each of the contacts to be in contact with the center of each of the chip resistors 1042 at each of the detection points between the first film layer and the second film layer when the flexible display screen is unfolded.

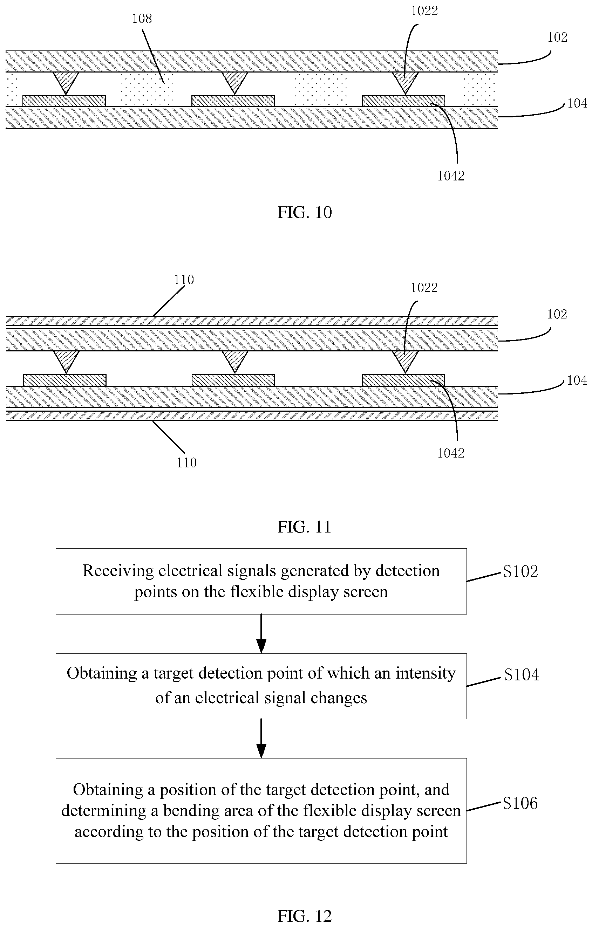

In an embodiment, as shown in FIG. 10, the first film layer is fitted to the second film layer by an adhesive 108. The adhesive is arranged on a gap between the detection points, thus providing a larger deformation space. When the flexible display is bent, the adhesive is deformed to provide space for the contact to move relative to the chip resistor. When the flexible display returns to a flat state, the adhesive also restores to an original shape to ensure the contacts of the first film layer of the flexible display screen to be accurately and respectively aligned with the center of each of the chip resistors 1042 of the second film layer.

In this embodiment, a display layer of the flexible display screen and the first film layer and the second film layer may be independent of each other. For example, the first film layer and the second film layer are fitted together as a whole, then which is fitted to the display layer. On the other hand, the first film layer or the second film layer can also be configured as the display layer of the flexible display screen, that is, the contacts or the chip resistors are directly arranged on the display layer for detection.

In an embodiment, as illustrated in FIG. 11, a magnetic substance 110 is arranged on non-fitting surfaces of the first film layer and of the second film layer. The first film layer and the second film layer are adsorbed and fitted by the magnetic substance 110, to ensure the first film layer and the second film layer to be in a fitted state.

In an embodiment, the magnetic substance is respectively coated on the non-fitting surfaces of the first film layer and the non-fitting surfaces of the second film layer. Such that each of the contacts of the first film layer is accurately aligned with the center of each of the chip resistors of the second film layer when the flexible display screen is unfolded. The magnetic substance still provides a certain space for the contacts to move relative to the chip resistors when the flexible display is bent.

In another embodiment, the magnetic substance may also be distributed in a partial area of the flexible display screen, such as an edge position and a central area. Such that each of the contacts of the first film layer is accurately aligned with the center of each of the chip resistors of the second film layer when the flexible display screen is unfolded. The magnetic substance still provides a certain space for the contacts to move relative to the chip resistors when the flexible display is bent.

In this embodiment, a display layer of the flexible display screen and the first film layer and the second film layer may be independent of each other. For example, the first film layer and the second film layer are fitted together as a whole, when which is fitted to the display layer.

In an embodiment, each of the chip resistors on the second film layer is substantially in a disc shape. A center of each of the chip resistors is in contact with each of corresponding contacts on the first film layer. It should be noted that, in other embodiments, a shape of the chip resistor may be in other shapes, such as in an ellipse shape and in a polygon shape, which will be not limited to the example provided by the embodiment of the present disclosure. Preferably, each of the chip resistors is in the disc shape, and the resistance values of each of the chip resistors are gradually varied. When the flexible display screen is bent in each direction, length of the contacts contacted with the corresponding chip resistors 1042 in each direction is the same, and electrical signals can be detected, which is the best effect.

Furthermore, a method for detecting bending of a flexible display screen is provided by the present disclosure, such that a bending position of the flexible display screen can be accurately determined. As illustrated in FIG. 12, the method includes the following processes.

At block S102, electrical signals generated by detection points on the flexible display screen are received.

In this embodiment, when the flexible display screen is unfolded, each of the contacts on the first film layer is in contact with a center of each of corresponding chip resistors, and intensities of the electrical signals at all the detection points are the same.

At block S104, a target detection point of which an intensity of an electrical signal changes is obtained.

When the flexible display screen is bent, as illustrated in FIG. 4, a contact position between the contact and the chip resistor at each of the detection points on a bending area may be offset, as illustrated in FIG. 5. Since the resistance values of each of the chip resistors monotonically vary from the center to the outer edge of each of the chip resistors, an intensity of an electrical signal passing through each of the detection points at a bending position may be varied, and the detection point of which the intensity of the electrical signal changes is take as the target detection point.

In this embodiment, the processor detects the intensity of the electrical signal of each of the detection points by directly obtaining the intensity of the electrical signal of each of the detection points, and determines whether the flexible display screen is bent according to the intensities of the electrical signals.

In another embodiment, the processor 12 can be coupled to each of the detection points 106 by an encoding circuit. The electrical signal of each of the detection points 106 is converted into a digital signal upon being encoded. The processor 12 analyzes positions of the detection points 106 of which corresponding digital signals change, and analyzes sampled and quantized codes of current intensities corresponding to the positions according to obtained digital signals, thus determining whether the flexible display screen is bent.

At block S106, a position of the target detection point is obtained, and a bending area of the flexible display screen according to the position of the target detection point is determined.

As illustrated in FIG. 6, the detection points with the same electrical signals on a bending area of the flexible display screen form a straight line when the flexible display screen 100 is bent. The electrical signals of the detection points on different straight lines on the bending area are different. A, B, C, D, and E respectively represent straight lines where the detection points with the same intensity of the electrical signal are.

In an embodiment, the resistance values of each of the chip resistors gradually increases from the center to the outer edge of each of the chip resistors 1042. The larger offset of a contact point between each of the contacts and of corresponding chip resistors is, the smaller an intensity of an electrical signal passing through corresponding detection point is. Such that a target detection point of which the intensity of the electrical signal changes may be found by detecting the intensity of the electrical signal passing through each of the detection points. An area of which electrical signals of the detection points change relative to an initial intensity of an electrical signal is taken as a bending area of the flexible display screen.

In other embodiments, resistance values of each of the chip resistor may also be gradually decreased from the center to the outer edge of each of the chip resistors.

In this embodiment, specifically, the intensity of the electrical signal of each of the detection points may be obtained firstly. A distribution curve of intensities of electrical signals is obtained according to the intensity of the electrical signal of each of the detection points 106 and order of the detection points, and it is determined whether the flexible display screen is bent according to a change in trend of the distribution curve. For example, as illustrated in FIG. 7 and FIG. 8, the distribution curve illustrates that intensities of electrical signals at different contact positions vary as resistance values, and a corresponding bending condition is illustrated in the figure. Intensities of electrical signals of a segment from A to B in FIG. 7 remain constant, and it is indicated that the intensities of the electrical signals at the detection points on the straight line A and the straight line B remain unchanged, and the flexible display screen is not bent. Intensities of electrical signals of a segment from B to D gradually decrease, and it is indicated that the flexible display screen is bent at the detection points on the straight line B, the straight line C, and the straight line D. The larger offset of the contact from the center of the chip resistors 1042 at corresponding detection point is, the greater bending degree is. Intensities of electrical signals of a segment from D to E also remain constant, and it is indicated that the flexible display screen is not bent at the detection points 106 on the straight line D and the straight line E.

As illustrated in FIG. 8, intensities of electrical signals of a segment from A to B remain constant, it is indicated that the intensities of the electrical signals at the detection points on the straight line A and the straight line B remain unchanged, and the flexible display screen is not bent. Intensities of electrical signals of a segment from B to E gradually decrease, and it is indicated that the flexible display screen is bent at the detection points on the straight line B, the straight line C, the straight line D, and the straight line E. The larger offset of the contact from the center of the chip resistor 1042 at corresponding detection point is, the greater bending degree is.

In an embodiment, the target detection point with intensity difference of the electrical signals relative to an initial intensity thereof greater than a threshold is obtained. The initial intensity is that of the electrical signal of each of the detection points when the flexible display screen is fully unfolded.

For example, when the flexible display screen is fully unfolded, the intensity of the electrical signal of each of the detection points is the same. It is assumed that a current represents the intensity of the electrical signal of each of the detection points 106, which is set to be 10mA, and the threshold is set to 2mA. When the flexible display screen is bent, according to the example in FIG. 6, detected electrical signals on the detection points on the straight line A equal 10mA. Detected electrical signals on the detection points on the straight line B equal 7.5mA. Detected electrical signals on the detection points on the straight line C equal 5mA. intensity differences of the electrical signals on the detection points on the straight line B or the straight line C exceed the set threshold, it is determined that the bending area is located on the straight line B and the straight line C. Such that it is possible to eliminate a slight bending caused by misoperation and avoid a power loss caused by an erroneous determination of the processor by setting an appropriate threshold.

In another embodiment, a detected intensity of an electrical signal equals a first intensity when the flexible display screen is bent for a first time. When the flexible display screen continues to bend based on the first bending, a detection point of which a change of an intensity of electrical signal relative to the first intensity exceeds a threshold is taken as a target detection point. In this embodiment, the terms "first" and "second" are only configured to illustrate the sequence, and the number of the bending is not limited to the number listed in the embodiment of the present disclosure.

For example, when the flexible display screen is bent for a first time, a threshold is set to 2 milliamps. According to the example in FIG. 6, electrical signals passing through detection points on the straight line A equal 10 milliamps. Electrical signals passing through detection points on the straight line B equal 7.5 milliamps. Electrical signal passing through detection points on the straight line C equal 5 milliamps. When the flexible display screen is bent for a second time, the electrical signals passing through the detection points on the straight line A equal 7.5 milliamps. The electrical signals passing through the detection points on the straight line B equal 5 milliamps. The electrical signals passing through the detection points on the straight line C equal 5 milliamps. Therefore, a bending area of the flexible display screen bent for the second time is that of the detection points located on the straight line A and the straight line B by comparing values of the electrical signals detected for the first time and values of the electrical signals detected for the second time.

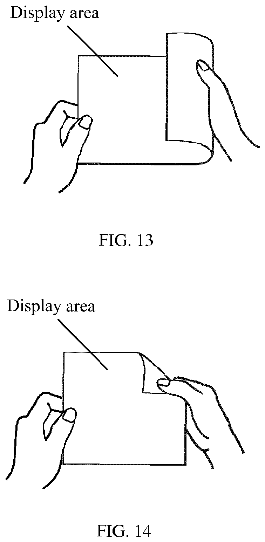

In an embodiment, a display area of the flexible display screen is obtained according to the bending area of the flexible display screen, and corresponding content is displayed on the display area. For example, as illustrated in FIG. 13 and FIG. 14, after detecting the bending area of the flexible display screen, it is determined that a display area is that of on the display screen excepts a partial area, which is bent, and the corresponding content is displayed on the display area. Specifically, taking FIG. 6 as an example, when the detected bending areas are the straight line B and an upper right region thereof, the intensities of the electrical signals of the detection points on the straight line A and a left side area thereof remain unchanged. Therefore, it is determined that the straight line A and the left side area are the display areas.

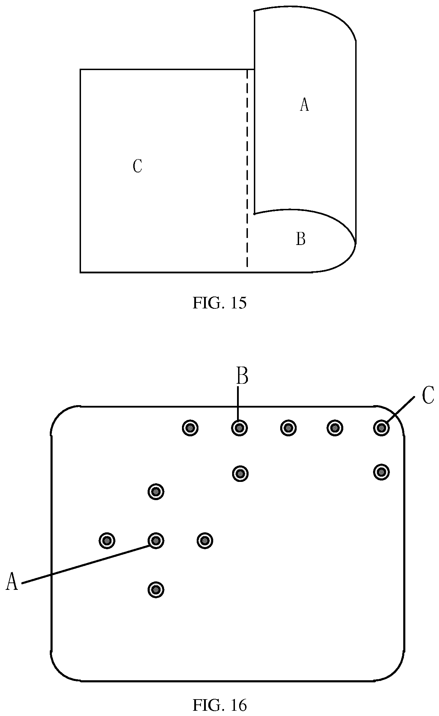

In an embodiment, a display function of a partial area upon the flexible display screen being folded may be turned off, and content is displayed only on the display area, thus saving energy consumption. For example, in FIG. 15, an area of a folded portion is an area A, and a display area is an area C. The content is not displayed on the area A, but is displayed only on the area C, thus saving the energy consumption.

In an embodiment, display functions on areas are that of being folded on the flexible display screen and being covered by a folded area may be turned off, thus saving energy consumption. Still taking FIG. 14 as an example, an area of a folded portion is an area A. A covered area corresponding to the area of the folded portion is an area B. A display area is an area C. At this time, the content is displayed on the area C, but the display functions on the area B and the area C are turned off, thus saving the energy consumption.

A bending angle of the flexible display screen is calculated according to obtained intensities of the electrical signals. Corresponding content on the display area is displayed when the bending angle is greater than a first preset angle threshold. The corresponding content on the display area is stopped displaying when the bending angle is greater than a second preset angle threshold. The first preset angle threshold is less than the second preset angle threshold. Taking FIG. 7 as an example, the intensities of the electrical signals of a segment from A to B remain constant, it is indicated that the intensities of the electrical signals at the detection points on the straight line A and the straight line B remain unchanged, and the flexible display screen is not bent. The intensities of the electrical signals of a segment from B to E gradually decrease, and it is indicated that the flexible display screen is bent at the detection points on the straight line B, the straight line C, and the straight line D, and the offset of the contact from the center of each of the chip resistors 1042 at each of the detection points is larger, that is, a degree of bending is greater. The intensities of the electrical signals of a segment from D to E also remain constant, and it is indicated that the flexible display screen is not bent at the detection points 106 on the straight line D and the straight line E. In the figure of the right side, the corresponding bending angle is 90 degrees.

As illustrated in FIG. 8, the intensities of the electrical signals of a segment from A to B remain constant, it is indicated that the intensities of the electrical signals at the detection points on the straight line A and the straight line B remain unchanged, and the flexible display screen is not bent. The intensities of the electrical signals of a segment from B to E gradually decrease, and it is indicated that the flexible display screen is bent at the detection points on the straight line B, the straight line C, the straight line D, and the straight line E. The corresponding bending angle is 180 degrees. Therefore, the bending angle of the flexible display screen can be calculated by changes of the intensities of the electrical signals.

After calculating the bending angle of the flexible display screen, it is assumed that the first preset angle threshold of the display content is set to be 30 degrees. That is, when the flexible display screen is bent and the bending angle exceeds 30 degrees, then the content is displayed on the display area of the flexible display screen. Such that power loss, which caused by still displaying contents on the display area upon the flexible display screen being bent at a small angle due to misoperation, can be avoided.

Furthermore, when the bending angle exceeds the second preset angle threshold, the content is stopped displaying on the display area. The second preset angle threshold is greater than the first preset angle threshold. For example, when the bending angle exceeds 90 degrees, the content is not displayed. Such that power loss, which caused by still displaying contents on the display area upon the bending angle being too large and the content displayed on the screen being impossible to read due to actual user's line of sight being blocked by the bent flexible display screen, can be avoided.

In an embodiment, it is also required to determine whether intensities of electrical signals on all of the detection points adjacent to the target detection point are changed. when only an intensity of an electrical signal on the target detection point changes, and the intensities of the electrical signals on the detection points adjacent to the target detection point remain unchanged, it can be determined that the acquired target detection point is invalid. An error signal may be generated due to damage of the contacts or the chip resistors 1042, thus affecting a determination of the target detection point.

In an embodiment, as illustrated in FIG. 16, three target detection points A, B and C at different positions on the flexible display screen are selected in the figure. When considering adjacent detection points, only the adjacent detection points with shortest distance from a target distance sensor in the figure are considered.

For the target detection point A located on a centre of the flexible display screen, four detection points are adjacent to the target detection point A. When an intensity of an electrical signal passing through the target detection point A is changed, and the intensities of electrical signals passing through the four detection points surrounding the target detection point A remain unchanged, it is determined that the target detection point A is faulty, and cannot be configured as the target detection point for determining the bending area. For the target detection point B located on an edge of the flexible display screen, three detection points are adjacent to the target detection point B. When an intensity of an electrical signal passing through the target detection point B is changed, and the intensities of electrical signals passing through the three detection points surrounding the target detection point B remain unchanged, it is determined that the target detection point B is faulty, and cannot be configured as the target detection point for determining the bending area. For the target detection point C, two detection points are adjacent to the target detection point C. When an intensity of an electrical signal passing through the target detection point C is changed, and the intensities of electrical signals passing through the two detection points surrounding the target detection point C remain unchanged, it is determined that the target detection point C is faulty, and cannot be configured as the target detection point for determining the bending area.

It should be noted that, the foregoing determination of the adjacent detection points is only an example provided by the embodiment. In other embodiments, distribution of the detection points on the flexible display screen may have other manners, and determination of the adjacent detection points may also be in various ways, which will not be limited to the examples provided in the embodiment.

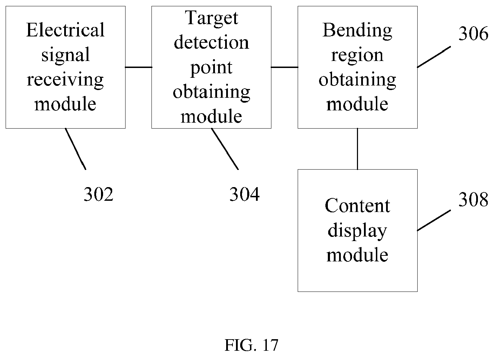

Furthermore, as illustrated in FIG. 17, a device for detecting bending of a flexible display screen is provided by the present disclosure, such that a bending position of the flexible display screen can be accurately determined, including an electrical signal receiving module 302, a target detection point obtaining module 304, a bending area obtaining module 306, and a content display module 308.

The electrical signal receiving module 302 is configured to electrical signals generated by detection points on the flexible display screen.

The target detection point obtaining module 304 is configured to obtain a target detection point of which an intensity of an electrical signal changes.

The bending area obtaining module 306 is configured to obtain a position of the target detection point, and determining a bending area of the flexible display screen according to the position of the target detection point.

The target detection point obtaining module 304 is further configured to:
obtain the target detection point with intensity difference of the electrical signals relative to an initial intensity thereof greater than a threshold, where the initial intensity is that of the electrical signal of each of the detection points when the flexible display screen is fully unfolded.

The device further includes a content display module 308 configured to: obtain a display area of the flexible display screen according to the bending area of the flexible display screen; and
display corresponding content on the display area.

The content display module 308 is further configured to:
calculate a bending angle of the flexible display screen according to obtained intensities of the electrical signals;
display corresponding content on the display area when the bending angle is greater than a first preset angle threshold; and
stop displaying the corresponding content on the display area when the bending angle is greater than a second preset angle threshold, wherein the first preset angle threshold is less than the second preset angle threshold.

The target detection point obtaining module 304 is further configured to: determine the target detection point to be invalid when intensities of electrical signals on all of the detection points adjacent to the target detection point remain unchanged.

Implementation of some embodiments will have the following beneficial effects.

A display panel of a flexible display screen is configured with a first film layer and a second film layer fitted to the first film layer. A first surface of the first film layer is configured with contacts arranged in a matrix. A first surface of the second film layer is configured with chip resistors arranged in a matrix. The first surface of the first film layer is fitted to the first surface of the second film layer. The contacts and the chip resistors are in one-to-one correspondence to form detection points. Resistance values of the chip resistor monotonically vary from a center to an outer edge of each of the chip resistors. The detection points are coupled to a processor. An electrical signal passing through each of the detection points is transmitted to the processor. When the flexible display screen is bent, the processor determines a bending position of the flexible display screen by determining a change of intensities of received electrical signals. The bending position of the flexible display screen is detected by measuring the intensities of electrical signals between the chip resistors and the contacts, such that a calculation of obtained electrical signals can have higher accuracy, and the bending position can be accurately determined.

It will be understood by those of ordinary skill in the art that all or a part of the various methods of the embodiments described above may be accomplished by means of a program to instruct associated hardware, the program may be stored in a computer-readable memory, which may include a flash memory, a read-only memory (ROM), a random-access memory (RAM), Disk or compact disc (CD), and so on.

The above is only the preferable embodiment of the present disclosure, the scope of the present disclosure is not limited to thereof. It will be understood by those of ordinary skill in the art that all or a part of the process of the method of the above embodiments described above, and equivalent changes made in the claims of the present disclosure are still within the scope of the present disclosure.

## Claims

1. A flexible display screen, comprising a first film layer and a second film layer, wherein
a first surface of the first film layer is configured with contacts arranged in a matrix;
a first surface of the second film layer is configured with chip resistors arranged in a matrix; resistance values of each of the chip resistors monotonically vary from a center to an outer edge of each of the chip resistors;
the first surface of the first film layer is fitted to the first surface of the second film layer; the contacts on the first film layer are in one-to-one correspondence with the chip resistors on the second film layer; a detection point is formed by each of the contacts and corresponding chip resistors; and
detection points are coupled to a processor configured to detect an intensity of an electrical signal passing through each of the detection points, and determine a bending area of the flexible display screen according to a change of the intensity of the electrical signal.

2. The flexible display screen of claim 1, wherein the first film layer is fitted to the second film layer by an adhesive.

3. The flexible display screen of claim 1, wherein a magnetic substance is arranged on non-fitting surfaces of the first film layer and of the second film layer; the first film layer and the second film layer are adsorbed and fitted by the magnetic substance.

4. The flexible display screen of claim 1, wherein when the flexible display screen is unfolded, the center of each of the chip resistors on the second film layer is in contact with each of the contacts on the first film layer.

5. A method for detecting bending of a flexible display screen, which is based on the processor of any one of claims 1 to 4, wherein the method comprises:
receiving electrical signals generated by detection points on the flexible display screen;
obtaining a target detection point of which an intensity of an electrical signal changes; and
obtaining a position of the target detection point, and determining a bending area of the flexible display screen according to the position of the target detection point.

6. The method of claim 5, wherein obtaining the target detection point of which the intensity of the electrical signal changes comprises:
obtaining the target detection point with intensity difference of the electrical signals relative to an initial intensity thereof greater than a threshold, wherein the initial intensity is that of the electrical signal of each of the detection points when the flexible display screen is fully unfolded.

7. The method of claim 5, further comprising:
obtaining a display area of the flexible display screen according to the bending area of the flexible display screen; and
displaying corresponding content on the display area.

8. The method of claim 5, further comprising:
calculating a bending angle of the flexible display screen according to obtained intensities of the electrical signals;
displaying corresponding content on the display area when the bending angle is greater than a first preset angle threshold; and
stopping displaying the corresponding content on the display area when the bending angle is greater than a second preset angle threshold, wherein the first preset angle threshold is less than the second preset angle threshold.

9. The method of claim 5, further comprising:
determining the target detection point to be invalid when intensities of electrical signals on all of the detection points adjacent to the target detection point remain unchanged.

10. A device for detecting bending of a flexible display screen, wherein the device comprises:
an electrical signal receiving module configured to receive electrical signals generated by detection points on the flexible display screen;
a target detection point obtaining module configured to obtain a target detection point of which an intensity of an electrical signal changes; and
a bending area obtaining module configured to obtain a position of the target detection point, and determine a bending area of the flexible display screen according to the position of the target detection point.

11. The device of claim 10, wherein the target detection point obtaining module is further configured to:
obtain the target detection point with intensity difference of the electrical signals relative to an initial intensity thereof greater than a threshold, wherein the initial intensity is that of the electrical signal of each of the detection points when the flexible display screen is fully unfolded.

12. The device of claim 10, wherein the device further comprises a content display module configured to:
obtain a display area of the flexible display screen according to the bending area of the flexible display screen; and
display corresponding content on the display area.

13. The device of claim 10, wherein the content display module is further configured to:
calculate a bending angle of the flexible display screen according to obtained intensities of the electrical signals;
display corresponding content on the display area when the bending angle is greater than a first preset angle threshold; and
stop displaying the corresponding content on the display area when the bending angle is greater than a second preset angle threshold wherein the first preset angle threshold is less than the second preset angle threshold.

14. The device of claim 10, wherein the target detection point obtaining module is further configured to:
determine the target detection point to be invalid when intensities of electrical signals on all of the detection points adjacent to the target detection point remain unchanged.
